# DEMANDE DE BREVET EUROPEEN

(11) **EP 3 249 935 A1**
(43) Date de publication de la demande: **29.11.2017**
(21) Numéro de dépôt: 17172174.9
(22) Date de dépôt: 22.05.2017
(51) Int. Cl.: H04N 21/431, H04N 21/472

(54) **BARRE DE NAVIGATION DANS UNE PLURALITÉ DE CONTENU VIDEOS**

(30) Priorité: 27.05.2016 FR 1654819
(71) Demandeur: Orange, 75015 Paris (FR)
(72) Inventeur: DA FONSECA, Caroline, 94880 Noiseau (FR); RUFIN, Christophe, 92120 Boulogne-Billancourt (FR); RUELLO, Yann, 92350 Le Plessis Robinson (FR)
(74) Mandataire: Cabinet Plasseraud

(57) **Abrégé**

L'invention concerne un procédé de traitement d'une pluralité de contenus vidéo pour une restitution d'au moins deux contenus de la pluralité par une interface utilisateur graphique, les contenus vidéo de la pluralité étant successivement restitués, le procédé comportant les étapes de :
- restitution en plein écran d'un premier contenu de ladite pluralité ;
- à une première durée prédéterminée avant la fin de la restitution dudit premier contenu vidéo, affichage d'un bandeau de progression comprenant une pluralité d'images, chaque image correspondant respectivement à un contenu vidéo de la pluralité de contenus vidéo ;
- restitution d'un deuxième contenu vidéo ;
- application d'un effet graphique à une image du bandeau correspondant au deuxième contenu ;
- suppression de l'affichage du bandeau de progression après une deuxième durée prédéterminée après le début de la restitution du deuxième contenu, de sorte que le deuxième contenu soit restitué en plein écran.

## Description

La présente invention appartient au domaine de la navigation dans une pluralité de contenus vidéo. Elle concerne en particulier un procédé de suivi de la progression d'une restitution de la pluralité de contenus.

Cette méthode est particulièrement avantageuse pour permettre à un utilisateur de suivre sur une interface graphique utilisateur la progression d'une succession de contenus vidéo, la succession de contenus vidéo ayant été personnalisée par ou pour l'utilisateur.

On entend par « contenu vidéo », tout type de contenu apte à restituer des images animées formant une vidéo, accompagnées ou non de son. Un exemple de contenu vidéo est un fichier avi ou mpeg. Dans la suite de la description, les termes « contenu vidéo », « contenu » et « vidéo » seront indistinctement utilisés.

On entend par « un restitution d'un contenu vidéo », tout traitement du contenu vidéo tel qu'au moins une information comprise dans le contenu puisse être transmise à l'utilisateur. La lecture d'au moins une partie des images ou de la bande son comprise dans le contenu vidéo, par un écran, des enceintes ou encore un dispositif holographique ou tridimensionnel sont des exemples de restitution de contenu vidéo.

On entend par « navigation dans une pluralité de contenus vidéo » la possibilité pour un utilisateur de suivre une progression ou de parcourir différents instants de la pluralité de contenus vidéo, par exemple en lançant une vidéo de la pluralité de vidéos ou en visualisant une image ou une barre de progression correspondant à l'avancement de la restitution dans la pluralité de contenus vidéo.

On entend par « interface utilisateur graphique », « GUI » pour Graphical User Interface en anglais, tout dispositif de dialogue homme-machine, dans lequel les objets à manipuler sont dessinés sous forme de pictogrammes à l'écran, de sorte que l'utilisateur peut les utiliser en imitant la manipulation physique de ces objets avec un dispositif de pointage (télécommande, doigts, stylet ou encore souris par exemple). En particulier, l'interface utilisateur graphique peut comprendre un affichage de divers composants comme une zone de restitution principale du contenu vidéo et un bandeau de progression, certains composants, ou certaines zones de composants, étant sélectionnables par l'utilisateur.

La multiplication des sources de contenus vidéo, telles que les hébergeurs internet de contenus vidéo, par exemple Dailymotion MARQUE DEPOSEE ou YouTube MARQUE DEPOSEE, les réseaux sociaux ou encore les emails, rend complexe la gestion des interfaces graphiques utilisateurs configurées pour la restitution de ces contenus.

En particulier, chaque source rend nécessaire l'exécution d'une application respective pour la restitution du contenu extrait de la source, au moyen d'une interface graphique utilisateur comprise dans l'application. Dans l'exemple d'une restitution de contenus vidéo sur une télévision au moyen d'un boîtier décodeur, ou encore « set-top-box » en anglais, un contenu extrait de la plateforme YouTube MARQUE DEPOSEE est restituée par une application dédiée, un contenu extrait d'un email est restituée par une application dédiée, etc.

L'exécution successive ou simultanée de ces applications présente de nombreux désavantages. En particulier, les ressources matérielles requises par ces applications sont importantes. En effet, les capacités processuelles (utilisation du processeur ou des mémoires vives) ou de la batterie du système à partir duquel les applications sont exécutées sont fortement impactées. En outre, le coût en bande passante consommée par le système est plus difficilement rationalisable lorsque plusieurs applications, conçues de manière hétérogène, sont utilisées.

Pour résoudre ces problèmes et faciliter la consultation des contenus vidéo par l'utilisateur, il a pu être proposé de rassembler les contenus vidéo et de les restituer au moyen d'une unique interface graphique utilisateur, ou au moins par une même application. Pour ce faire, il est par exemple possible de restituer successivement différents contenus vidéo, de sources différentes, au moyen d'une même interface utilisateur graphique.

L'agrégation des contenus vidéo en une pluralité de contenus vidéo, restitués successivement, rend complexe le suivi par un utilisateur de la progression de la restitution de ces contenus. L'utilisateur peut typiquement souhaiter savoir où il en est dans la restitution de la pluralité de contenus. Pour ce faire, il est fréquemment amené à solliciter l'interface graphique utilisateur pour savoir où il se situe dans la restitution de la pluralité de contenus.

Ces manipulations restreignent les avantages, en termes de sollicitation des ressources matérielles, de l'agrégation des contenus vidéo en une pluralité de contenus restitués par une unique interface. En effet, les interactions avec l'interface utilisateur sont couteuses en énergie électrique et peuvent également solliciter de manière injustifiée le processeur.

Il existe donc un besoin de rationalisation de la restitution d'une pluralité de contenus vidéo à partir d'une interface graphique utilisateur.

La présente invention vient améliorer la situation.

A cet effet, un premier aspect de l'invention concerne un procédé de traitement d'une pluralité de contenus vidéo pour une restitution d'au moins deux contenus de la pluralité par une interface utilisateur graphique, les contenus vidéo de la pluralité étant successivement restitués, le procédé comportant les étapes de :
- restitution en plein écran d'un premier contenu vidéo de ladite pluralité ;
- à une première durée prédéterminée avant la fin de la restitution dudit premier contenu vidéo, affichage d'un bandeau de progression comprenant une pluralité d'images, chaque image correspondant respectivement à un contenu vidéo de la pluralité de contenus vidéo ;
- restitution d'un deuxième contenu vidéo ;
- application d'un effet graphique à une image du bandeau correspondant au deuxième contenu vidéo ;
- suppression de l'affichage du bandeau de progression après une deuxième durée prédéterminée après le début de la restitution du deuxième contenu, de sorte que le deuxième contenu soit restitué en plein écran.

On entend par « application d'un effet graphique à une image du bandeau » toute action configurée pour mettre en exergue l'image concernée parmi la pluralité d'images du bandeau. L'encadrement de l'image par un liseré de différentes épaisseurs et/ou de couleur, la modification de la taille de l'image, le surlignage de l'image sont des exemples d'effets graphiques.

Les étapes d'affichage et d'application de l'effet graphique ont notamment pour effet d'informer l'utilisateur du moment de la succession de la pluralité de contenus où il se situe. Par exemple, si cinq vidéos sont comprises dans la pluralité de contenus vidéo, l'utilisateur sera informé du passage de la troisième à la quatrième vidéo par l'affichage du bandeau de progression et l'effet graphique. Il n'est donc plus nécessaire que l'utilisateur interroge constamment l'interface graphique utilisateur pour savoir où il se situe dans la pluralité de contenus ce qui réduit la consommation de la batterie et du processeur.

En outre, l'affichage puis la suppression du bandeau de manière automatisée informe l'utilisateur sans toutefois perturber la consultation de la pluralité de contenus. L'utilisateur n'a donc pas à interagir avec l'interface graphique utilisateur, ce qui réduit encore la consommation électrique et en ressources de calcul.

Il est précisé que l'ordre des étapes du procédé selon l'invention n'est pas nécessairement celui donné ci-dessus. En particulier, l'étape d'application de l'effet graphique et l'étape de restitution du deuxième contenu vidéo peuvent être interverties ou effectuées simultanément. Lorsque ces étapes sont effectuées simultanément, l'utilisateur se repère encore plus facilement dans la progression au sein de la pluralité de contenus.

Dans un mode de réalisation, lorsque le bandeau est affiché, l'interface utilisateur graphique comporte la restitution du premier puis du deuxième contenu vidéo en plein écran et l'affichage du bandeau par incrustation. La vidéo ne bouge donc pas, seul le bandeau s'ajoute à la vidéo diffusée en plein écran. Ainsi, il n'y a pas d'homothétie des images constituant la vidéo (comme ce serait le cas si la totalité des images étaient affichées mais que leurs dispositions étaient modifiées pour laisser un espace de l'écran au bandeau). L'utilisateur est donc encore moins perturbé par l'apparition du bandeau.

Dans un autre mode de réalisation, lorsque le bandeau est affiché, l'interface utilisateur graphique comporte une zone de restitution principale configurée pour restituer le premier puis le deuxième contenu vidéo et comporte le bandeau de progression. Dans cette situation, il y a bien une homothétie des images constituant la vidéo lors du passage de la restitution plein écran à la restitution avec bandeau. Ceci évite à l'utilisateur de perdre une partie des images constituant la vidéo (le bandeau obstruant une partie des images constituant la vidéo s'il est simplement incrusté).

Dans un mode de réalisation, le bandeau comporte une image correspondant au premier contenu vidéo. Dans ce mode de réalisation, au moins l'image correspondante au premier contenu vidéo est animée, de sorte que la restitution du premier contenu vidéo et l'animation de l'image correspondant au premier contenu soit synchronisées.

Dans un autre mode de réalisation, au moins l'image correspondant au deuxième contenu vidéo est animée, de sorte que la restitution du deuxième contenu vidéo et l'animation de l'image correspondant au deuxième contenu soit synchronisées.

La correspondance entre les images animées du bandeau et le contenu restitué facilite encore le suivi par l'utilisateur de la progression dans la pluralité de contenus. En effet, il peut reconnaitre directement dans le bandeau ce qui est par exemple restitué dans la zone de restitution principale.

Dans un mode de réalisation, au moins le deuxième contenu vidéo comprend des métadonnées, de sorte que l'étape d'application de l'effet graphique comporte en outre l'affichage d'au moins une partie desdites métadonnées. En particulier, les métadonnées peuvent être affichées dans une zone séparée de la zone d'affichage du bandeau. Les interactions avec l'interface graphique utilisateur, et donc les sollicitations de la batterie et du processeur, sont encore réduites. En effet, la présentation à l'utilisateur des métadonnées lui évite d'avoir à manipuler l'interface graphique utilisateur pour obtenir les informations comprises dans les métadonnées.

Dans un mode de réalisation, la succession de contenus vidéo compris dans la pluralité de contenu vidéo est déterminée par au moins un élément parmi un historique de contenus vidéo consultés par l'utilisateur de l'interface graphique utilisateur, des contenus vidéo partagés sur un réseau social par des relations sur le réseau social de l'utilisateur de l'interface graphique utilisateur, des préférences de l'utilisateur de l'interface graphique utilisateur. La pertinence des vidéos comprises dans la pluralité de contenus est donc améliorée.

Dans un autre mode de réalisation, les métadonnées comprennent au moins une information sur ledit au moins un élément. L'utilisateur peut donc connaître la source des vidéos qu'il consulte.

Dans un mode de réalisation, les images du bandeau s'étendent dans une direction parallèle au bandeau. La compréhension de la succession des vidéos de la pluralité de vidéos est ainsi facilitée.

Un deuxième aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un dispositif de traitement d'une pluralité de contenus vidéo pour une restitution d'au moins deux contenus de la pluralité par une interface utilisateur graphique, les contenus vidéo de la pluralité étant successivement restitués, le dispositif comportant :
- un écran configuré pour afficher l'interface utilisateur graphique ;
- un processeur configuré pour effectuer les opérations de :
   * restitution en plein écran d'un premier contenu vidéo de ladite pluralité ;
   * à une première durée prédéterminée avant la fin de la restitution dudit premier contenu vidéo, affichage d'un bandeau de progression comprenant une pluralité d'images, chaque image correspondant respectivement à un contenu vidéo de la pluralité de contenus vidéo ;
   * restitution d'un deuxième contenu vidéo ;
   * application d'un effet graphique à une image du bandeau correspondant au deuxième contenu vidéo ;
   * suppression de l'affichage du bandeau de progression après une deuxième durée prédéterminée après le début de la restitution du deuxième contenu, de sorte que le deuxième contenu soit restitué en plein écran.

D'autres caractéristiques et avantages de l'invention apparaîtront à l'examen de la description détaillée ci-après, et des dessins annexés sur lesquels:
- la figure 1 illustre un contexte d'utilisation de l'invention, selon un mode de réalisation ;
- la figure 2 est un diagramme illustrant les étapes d'un procédé selon un mode de réalisation de l'invention ;
- la figure 3 illustre un microcontrôleur, selon un mode de réalisation de l'invention.

L'invention est décrite ci-après dans son application, non limitative, à un écran de télévision recevant des données d'un boîtier décodeur, ou encore « set-top-box » en anglais, le décodeur recevant lui-même des instructions d'un utilisateur, par exemple au moyen d'une télécommande. La télévision peut également intégrer les fonctionnalités mises en oeuvre par le boîtier décodeur. D'autres applications telles qu'un smartphone contrôlé par l'utilisateur à l'aide d'un écran tactile, une tablette contrôlée par un stylet ou encore un contrôle par détection de mouvements par une console de jeux sont également possibles.

On entend par « écran tactile » tout type d'écran apte à être contrôlé par un mouvement de l'utilisateur, cette définition prenant notamment en compte le contrôle d'écran par une analyse des mouvements effectués à proximité, directe ou plus lointaine, de l'écran. Des écrans de technologie à ondes de surface, capacitive, à infrarouge, NFI (pour « Near Field Imaging », imagerie en champs proche en français), à détection visuelle de mouvements (comme le dispositif Kinect, MARQUE DEPOSEE) sont des exemples d'écrans tactiles.

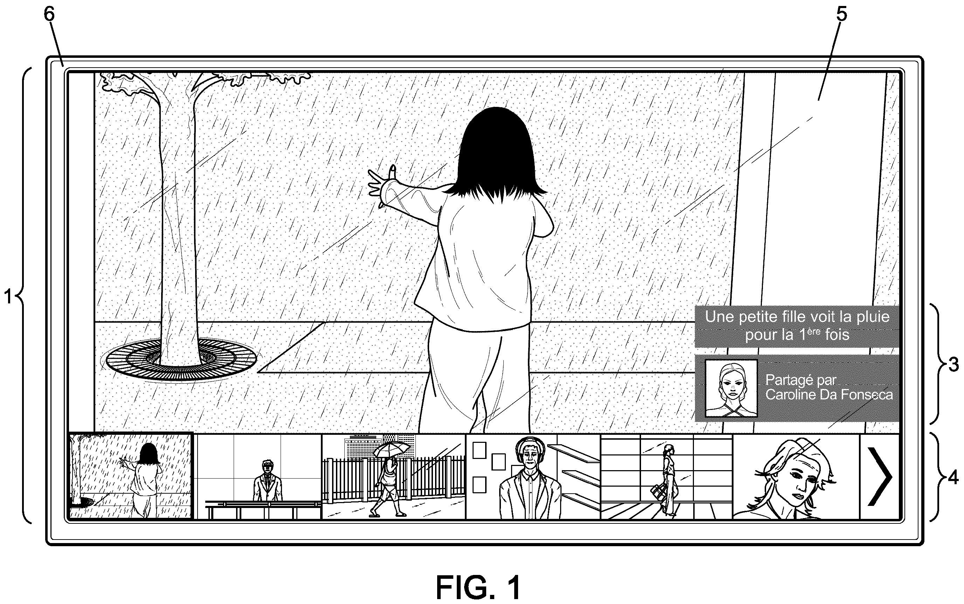

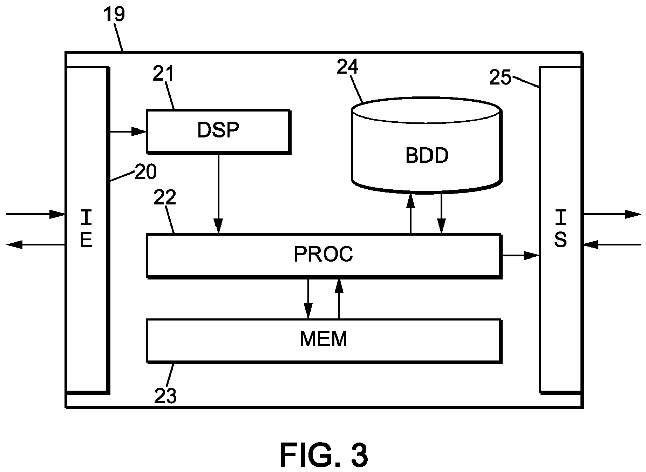

La **figure 1** représente un contexte de mise en oeuvre de l'invention. En particulier, un écran de télévision 6, recevant typiquement des données d'un décodeur comprenant un microcontrôleur décrit ci-après en référence à la figure 3, est configuré pour afficher une interface graphique utilisateur 1.

L'interface graphique utilisateur 1 comporte :
- une zone de restitution principale 5 configurée pour restituer des contenus vidéo ;
- un bandeau de progression 4 ; et
- une zone d'affichage 3 de métadonnées.

Sur la figure 1, l'image (petite fille sous la pluie) du contenu vidéo restitué est représentée en plein écran, le bandeau 4 et la zone 3 étant incrustées sur l'image représentée en plein écran. Dans cette situation, la zone 5 correspond donc à l'image (petite fille sous la pluie) du contenu vidéo, amputée d'une partie basse qui est obstruée par le bandeau 4 et de la partie réservée à l'affichage des métadonnées.

Dans un autre mode de réalisation, une homothétie de l'image (petite fille sous la pluie) du contenu vidéo est effectuée de sorte que la zone 5 restitue totalement l'image du contenu vidéo. Typiquement, la taille de l'image peut être réduite et l'image translatée pour être centrée dans la zone 5. D'autres combinaisons pour l'affichage de l'interface graphique utilisateur sont également envisageables (incrustation des métadonnées mais homothétie de sorte que le bandeau n'obstrue pas le bas de l'image).

Le bandeau 4 comprend une pluralité d'images, chaque image correspondant respectivement à un contenu vidéo d'une pluralité de contenus vidéo. Les images du bandeau s'étendent dans une direction parallèle au bandeau. Les images du bandeau peuvent, de la gauche vers la droite, correspondre à la succession de vidéos de la pluralité de vidéos. Dans une région du monde dans laquelle il est usuel de représenter une succession chronologique de la droite vers la gauche, les images du bandeau peuvent, de la droite vers la gauche, correspondre à la succession de vidéos de la pluralité de vidéos.

Par exemple, sur la figure 1, des images représentant une petite fille sous la pluie, une émission de télévision, une personne marchant sous la pluie, un clip d'un acteur seul, une petite fille souriant et une actrice mystérieuse sont comprises dans le bandeau. La pluralité de vidéos comprend les vidéos correspondant à ces images. Les vidéos sont successivement restituées, notamment dans la zone 5, par exemple dans l'ordre des images du bandeau 4. Ainsi, si la totalité de la pluralité de vidéos est restituée, une vidéo de petite fille sous la pluie, une émission de télévision, un match de sport, etc. seront successivement restituées.

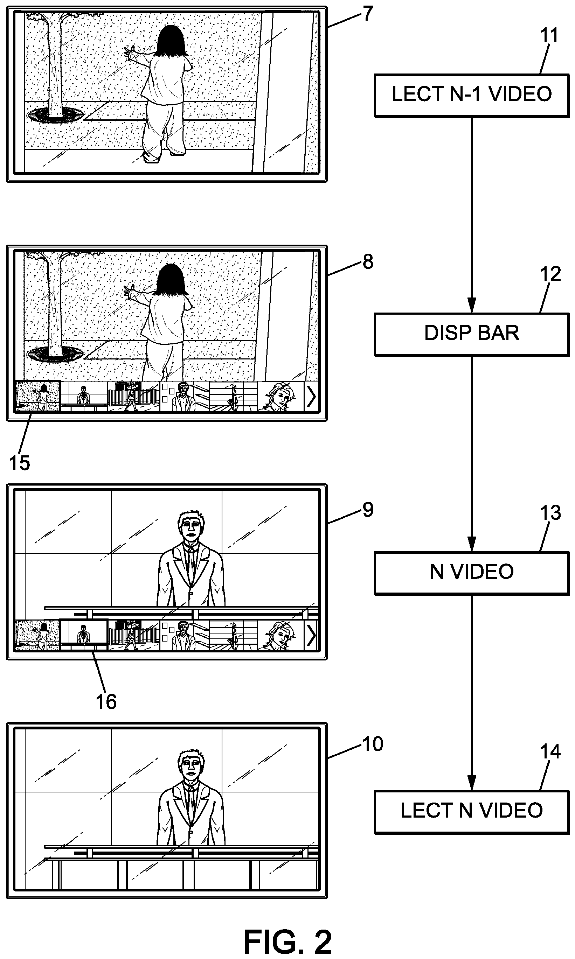

En outre, la totalité des vidéos de la pluralité de vidéos peut-être représentée dans le bandeau 4. En variante, notamment quand un grand nombre de vidéos est présent dans la pluralité de vidéos, seules quelques vidéos sont représentées par une image dans le bandeau 4. Dans cette situation, les images du bandeau peuvent représenter au moins une vidéo précédant et/ou suivant la vidéo restituée (petite fille sous la pluie). Pour parcourir d'autres images correspondant à d'autres vidéos, l'utilisateur peut interagir avec l'interface graphique utilisateur pour afficher ces autres images dans le bandeau, par exemple en sélectionnant la flèche situé à droite du bandeau 4, à la figure 1 ou aux références 8 et 9 de la figure 2.

Dans un mode de réalisation, la succession de contenus vidéo compris dans la pluralité de contenu vidéo est déterminée par au moins un élément parmi :
- un historique de contenus vidéo consultés par l'utilisateur de l'interface graphique utilisateur. Cet historique peut également être exporté depuis d'autres applications ou interfaces. Par exemple, cet historique peut correspondre à des vidéos visionnées sur la plateforme YouTube MARQUE DEPOSEE ;
- des contenus vidéo partagés sur un réseau social par des relations sur le réseau social de l'utilisateur de l'interface graphique utilisateur. Ces contenus peuvent également être les contenus partagés par l'utilisateur lui-même sur le réseau social. Le réseau social est par exemple Facebook MARQUE DEPOSEE, Twitter MARQUE DEPOSEE ou Instagram MARQUE DEPOSEE ;
- des préférences de l'utilisateur de l'interface graphique utilisateur. L'utilisateur peut ainsi indiquer apprécier les vidéo d'animaux, les vidéo de moins de 30 secondes, les vidéos en noir et blanc ou encore les vidéos diffusées par une chaîne de télévision particulière.

La sélection des contenus de la pluralité de vidéos peut être faite en prenant en compte un des éléments susmentionnés ou une combinaison de ces éléments. Par exemple, une vidéo peut-être choisie à partir de la constatation que l'utilisateur regarde fréquemment des vidéos attendrissantes partagées sur Facebook MARQUE DEPOSEE par le contact Caroline Da Fonseca. Ainsi, la vidéo de petite fille sous la pluie partagée sur Facebook MARQUE DEPOSEE par Caroline Da Fonseca a pu être sélectionnée à partir de ces critères.

La sélection peut également être faire directement par l'utilisateur, qui sélectionne les vidéos pour qu'elles soient intégrées à la pluralité de vidéos.

Les métadonnées, affichées dans la zone 3, peuvent comprendre une information sur l'élément ayant conduit à la sélection de la vidéo. Par exemple, l'information relative au contact Facebook MARQUE DEPOSEE ayant partagé la vidéo de la petite fille peut être indiqué dans la zone 3.

La figure 2 illustre les étapes du procédé selon l'invention, dans un mode de réalisation. En particulier, les étapes suivantes sont représentées :
- à l'étape 11, restitution en plein écran d'un premier contenu vidéo (petite fille sous la pluie) de la pluralité de vidéos ;
- à l'étape 12, affichage du bandeau 4 à une première durée prédéterminée avant la fin de la restitution de la première vidéo ;
- à l'étape 13, restitution du deuxième contenu vidéo et application d'un effet graphique 16 à une image du bandeau correspondant à un deuxième contenu vidéo, le deuxième contenu faisant suite au premier contenu ;
- à l'étape 14, suppression de l'affichage du bandeau 4 après une deuxième durée prédéterminée après le début de la restitution du deuxième contenu, de sorte que le deuxième contenu soit restitué en plein écran.

L'affichage de l'interface graphique utilisateur 1 est illustré aux références 7, 8, 9 et 10. Les références 7, 8, 9 et 10 correspondent respectivement aux étapes 11, 12, 13 et 14.

A l'étape 12, dans un mode de réalisation, un effet graphique 15 est également appliqué à l'image du bandeau correspondant au premier contenu vidéo (petite fille sous la pluie). L'effet graphique peut correspondre à un simple encadrement de l'image, comme cela est illustré à la figure 2. D'autres effets sont également envisageables, tels que l'encadrement de l'image par un liseré de différentes épaisseurs et/ou de couleur, la modification de la taille de l'image, le surlignage de l'image, etc.

Lorsque le bandeau 4 est affiché, l'interface utilisateur graphique 1 peut comporter la restitution du premier puis du deuxième contenu vidéo dans la zone de restitution principale 5. La zone de restitution principale pouvant comprendre les images de la vidéo restituée en intégralité, ou seulement une partie de ces images (images rognées, voir aussi explications ci-avant en référence à la figure 1).

Dans un mode de réalisation particulier, l'effet graphique est appliqué à une troisième durée prédéterminée avant, après ou simultanément au début de la restitution d'un deuxième contenu vidéo de la pluralité de contenus vidéo.

La première, deuxième et/ou troisième durée prédéterminée peut être choisie par l'utilisateur, prédéfinie ou encore variable selon le contenu vidéo. Dans un mode de réalisation, la première, deuxième et/ou troisième durée prédéterminée est de quelques secondes, par exemple une seconde.

Dans un mode de réalisation, au moins une image comprise dans le bandeau 4 est animée. Par exemple, l'image animée peut-être celle correspondante à la vidéo restituée dans la zone de restitution principale 5. Ainsi, dans l'exemple donné à la figure 2, à la référence 8, l'image comprise dans l'effet graphique 15 est animée, de sorte que la restitution du premier contenu vidéo (petite fille sous la pluie) et l'animation de l'image comprise dans l'effet graphique 15 soit synchronisées. De même, à la référence 9, l'image animée comprise dans l'effet graphique 16 et le deuxième contenu vidéo (émission de télévision) restitué sont synchronisés.

Le détail d'un microcontrôleur 19, compris dans le boitier décodeur, par exemple, à partir duquel les étapes sont mise en oeuvre les étapes du procédé décrit en référence à la figure 2, notamment, est ici décrit en référence à la **figure 3**.

Ce microcontrôleur 19 peut prendre la forme d'un boitier comprenant des circuits imprimé, de tout type d'ordinateur ou de tout type de sous-partie du boitier décodeur.

Le microcontrôleur 19 comprend une mémoire vive 23 pour stocker des instructions pour la mise en oeuvre par un processeur 22 des étapes du procédé décrit en référence à la figure 2, notamment. Le dispositif comporte aussi une mémoire de masse 24 pour le stockage de données destinées à être conservées après la mise en oeuvre du procédé.

Le microcontrôleur 19 peut en outre comporter un processeur de signal numérique (DSP) 21. Ce DSP 21 reçoit par exemple la vidéo pour mettre en forme, démoduler et amplifier, de façon connue en soi cette vidéo.

Le microcontrôleur 19 comporte également une interface d'entrée 20 pour la réception de données telles que la vidéo, les signaux d'entrée reçus de l'utilisateur, des paramètres de fonctionnement, etc. Le microcontrôleur 19 comporte en outre une interface de sortie 25 notamment pour la transmission de données d'affichage à destination de l'écran.

La présente invention ne se limite pas aux formes de réalisation décrites ci-avant à titre d'exemples ; elle s'étend à d'autres variantes.

Ainsi, on a décrit ci-avant l'invention dans son application à un écran de télévision reliée à un boîtier décodeur. L'invention peut également mise en oeuvre sur un smartphone, une tablette, un ordinateur portable ou fixe ou tout autre dispositif électronique.

## Revendications

1. Procédé de traitement d'une pluralité de contenus vidéo pour une restitution d'au moins deux contenus de la pluralité par une interface utilisateur graphique, les contenus vidéo de la pluralité étant successivement restitués, le procédé comportant les étapes de :
- restitution en plein écran d'un premier contenu vidéo de ladite pluralité ;
- à une première durée prédéterminée avant la fin de la restitution dudit premier contenu vidéo, affichage d'un bandeau de progression comprenant une pluralité d'images, chaque image correspondant respectivement à un contenu vidéo de la pluralité de contenus vidéo ;
- restitution d'un deuxième contenu vidéo ;
- application d'un effet graphique à une image du bandeau correspondant au deuxième contenu vidéo ;
- suppression de l'affichage du bandeau de progression après une deuxième durée prédéterminée après le début de la restitution du deuxième contenu, de sorte que le deuxième contenu soit restitué en plein écran.

2. Procédé selon la revendication 1, dans lequel les étapes de restitution du deuxième contenu vidéo et d'application de l'effet graphique sont effectuées simultanément.

3. Procédé selon la revendication 1 ou 2, dans lequel, lorsque le bandeau est affiché, l'interface utilisateur graphique comporte la restitution du premier puis du deuxième contenu vidéo en plein écran et l'affichage du bandeau par incrustation.

4. Procédé selon la revendication 1 ou 2, dans lequel, lorsque le bandeau est affiché, l'interface utilisateur graphique comporte :
- une zone de restitution principale configurée pour restituer le premier puis le deuxième contenu vidéo ;
- le bandeau de progression.

5. Procédé selon l'une des revendications 3 ou 4, dans lequel le bandeau comporte une image correspondant au premier contenu vidéo, et
dans lequel au moins l'image correspondante au premier contenu vidéo est animée, de sorte que la restitution du premier contenu vidéo et l'animation de l'image correspondant au premier contenu soit synchronisées.

6. Procédé selon l'une des revendications 3 à 5, dans lequel au moins l'image correspondant au deuxième contenu vidéo est animée, de sorte que la restitution du deuxième contenu vidéo et l'animation de l'image correspondant au deuxième contenu soit synchronisées.

7. Procédé selon l'une des revendications précédentes, dans lequel au moins le deuxième contenu vidéo comprend des métadonnées, de sorte que l'étape d'application de l'effet graphique comporte en outre l'affichage d'au moins une partie desdites métadonnées.

8. Procédé selon la revendication 7, dans lequel les métadonnées sont affichées dans une zone séparée de la zone d'affichage du bandeau.

9. Procédé selon l'une des revendications précédentes, dans lequel la succession de contenus vidéo compris dans la pluralité de contenu vidéo est déterminée par au moins un élément parmi :
- un historique de contenus vidéo consultés par l'utilisateur de l'interface graphique utilisateur ;
- des contenus vidéo partagés sur un réseau social par des relations sur le réseau social de l'utilisateur de l'interface graphique utilisateur ;
- des préférences de l'utilisateur de l'interface graphique utilisateur.

10. Procédé selon les revendications 8 et 9, dans lequel les métadonnées comprennent au moins une information sur ledit au moins un élément.

11. Procédé selon l'une des revendications précédentes, dans lequel les images du bandeau s'étendent dans une direction parallèle au bandeau.

12. Programme informatique comportant des instructions pour la mise en oeuvre du procédé selon l'une quelconque des revendications précédentes, lorsque ces instructions sont exécutées par un processeur.

13. Dispositif de traitement d'une pluralité de contenus vidéo pour une restitution d'au moins deux contenus de la pluralité par une interface utilisateur graphique, les contenus vidéo de la pluralité étant successivement restitués, le dispositif comportant :
- un écran configuré pour afficher l'interface utilisateur graphique ;
- un processeur configuré pour effectuer les opérations de :
* restitution en plein écran d'un premier contenu vidéo de ladite pluralité ;
* à une première durée prédéterminée avant la fin de la restitution dudit premier contenu vidéo, affichage d'un bandeau de progression comprenant une pluralité d'images, chaque image correspondant respectivement à un contenu vidéo de la pluralité de contenus vidéo ;
* restitution d'un deuxième contenu vidéo ;
* application d'un effet graphique à une image du bandeau correspondant au deuxième contenu vidéo ;
* suppression de l'affichage du bandeau de progression après une deuxième durée prédéterminée après le début de la restitution du deuxième contenu, de sorte que le deuxième contenu soit restitué en plein écran.
